# EUROPEAN PATENT APPLICATION

(11) **EP 4 736 733 A1**
(43) Date of publication of application: **06.05.2026**
(21) Application number: 24936840.8
(22) Date of filing: 09.10.2024
(51) Int. Cl.: A47L 25/00, C08K 3/38, C08L 83/04

(54) **CLEANING PUTTY AND METHOD FOR CLEANING MOUNTED SEMICONDUCTOR PARTS USING SAME**

(30) Priority: 26.04.2024 JP 2024072994
(71) Applicant: Fuji Polymer Industries Co., Ltd., Nagoya-shi, Aichi 450-0002 (JP)
(72) Inventor: SUZUMURA, Katsuyuki, Nagoya-shi, Aichi 463-0026 (JP)
(74) Representative: Dehns
(86) International application number: PCT/JP2024/036089
(87) International publication number: WO 2025/225051

(57) **Abstract**

Cleaning putty for cleaning a semiconductor package component is provided. The cleaning putty contains a millable silicone rubber composition as a main component, and has a degree of plasticity of 20 or more and less than 80 when determined in accordance with JIS K 6300-3:2019 / ISO 2007:1991, and adhesive strength with aluminum of 0.3 N or more and 4 N or less. A cleaning method using the cleaning putty includes cleaning a semiconductor package component by pressing the cleaning putty against a printed circuit board to which a silicone-based heat-dissipating material has been applied or attached, and then peeling off the cleaning putty therefrom. Thus, provided are cleaning putty provided with putty properties with which the cleaning putty selectively adheres to a silicone material without adhering to a substrate and a lead to prevent breakage of the component and can enter a minute gap, and a method for cleaning a semiconductor package component using the cleaning putty.

## Description

### Technical Field

The present invention relates to cleaning putty, and a method for cleaning a semiconductor package component using the cleaning putty.

### Background Art

In a process of producing a printed circuit board such as a CPU (central processing unit) or a GPU (graphics processing unit) on which semiconductor elements are mounted, minute dust particles are often generated. Also, when thermally conductive grease or thermally conductive putty serving as a heat-dissipating material for an electronic component is mounted on an electronic component, minute dust particles may be generated. If these minute dust particles are not removed, products will be rejected, which leads to a problem of a decrease in the product yield. Also, when being repaired or recoated, the heat-dissipating material needs to be removed, and insufficient removal poses problems of a deterioration of heat dissipation properties and contamination caused by detachment of the heat-dissipating material.

Patent Document 1 proposes a silicone-based adhesive having a specific gel fraction and a specific degree of swelling in toluene. Patent Document 2 proposes a silicone-based adhesive with pores or cracks. Patent Document 3 proposes an addition reaction curable type silicone-based adhesive.

### Prior Art Documents

### Patent Documents

Patent Document 1: Japanese Patent No. 6626125
Patent Document 2: JP 2004-123760A
Patent Document 3: JP 2004-091703A

### Disclosure of Invention

### Problem to be Solved by the Invention

However, a conventional adhesive even adheres to a substrate and leads arranged thereon, which may lead to breakage of the component. In addition, a minute gap between leads cannot be sufficiently cleaned through wiping using cloth or the like, and needle scraping needs to be conducted, which takes a long time.

To solve the aforementioned conventional problems, the present invention provides cleaning putty provided with putty properties with which the cleaning putty selectively adheres to a silicone material without adhering to a substrate and a lead to prevent breakage of the component and can enter a minute gap, and a method for cleaning a semiconductor package component using the cleaning putty.

### Means for Solving Problem

An embodiment of the present invention relates to cleaning putty for cleaning a semiconductor package component, the cleaning putty containing a millable silicone rubber composition as a main component, and having a degree of plasticity of 20 or more and less than 80 when determined in accordance with JIS K 6300-3:2019 / ISO 2007:1991, and adhesive strength with aluminum of 0.3 N or more and 4 N or less.

In addition, an embodiment of the present invention relates to a method for cleaning a semiconductor package component using the cleaning putty, the method including cleaning a semiconductor package component by pressing the cleaning putty against a printed circuit board to which a silicone-based heat-dissipating material has been applied or attached, and then peeling off the cleaning putty therefrom.

### Effects of the Invention

With the present invention, a cleaning putty that contains a millable silicone rubber composition as a main component and that has a degree of plasticity of 20 or more and less than 80 when determined in accordance with JIS K 6300-3:2019 / ISO 2007:1991 and adhesive strength with aluminum of 0.3 N or more and 4 N or less is obtained, thus making it possible to provide cleaning putty capable of significantly reducing time and a man-hour required for cleaning by being provided with putty properties with which the cleaning putty selectively adheres to a silicone material without adhering to a substrate and a lead to prevent breakage of the component and can enter a minute gap, and a method for cleaning a semiconductor package component using the cleaning putty.

### Brief Description of Drawings

[FIG. 1] FIG. 1 is a schematic cross-sectional view of a semiconductor package component according to an embodiment of the present invention.
[FIG. 2] FIG. 2 is a schematic perspective view of cleaning putty according to an embodiment of the present invention.
[FIG. 3] FIG. 3 is a schematic perspective view of cleaning putty according to another embodiment of the present invention.

### Description of the Invention

The present invention is directed to cleaning putty for cleaning a semiconductor package component. The semiconductor package component includes a printed circuit board such as a CPU (central processing unit) or a GPU (graphics processing unit) on which semiconductor elements are mounted. The cleaning putty of the present invention contains millable silicone rubber as a main component. The millable silicone rubber is solid silicone rubber, and is, for example, clayish silicone rubber that contains a linear polymer having a degree of polymerization of 3000 to 10000 as a main component, is formulated with various additives such as silica-based reinforcing filler, a lubricant, and a colorant, and is cured through heating using a vulcanizing agent. This millable silicone rubber is used, and the degree of plasticity, the adhesion, and the like are adjusted so as to achieve excellent workability. In the description above, the content of the millable silicone rubber as the main component is preferably 40 mass% or more with respect to 100 mass% of the cleaning putty. The upper limit is 100 mass%. The cleaning putty may contain organopolysiloxane other than the millable silicone rubber as long as the content of the millable silicone rubber is within the range above. The millable silicone rubber may be uncrosslinked millable silicone rubber.

The cleaning putty of the present invention has a degree of plasticity of 20 or more and less than 80, preferably 20 or more and 75 or less, and more preferably 20 or more and 70 or less, when determined in accordance with JIS K 6300-3:2019 / ISO 2007:1991. When the degree of plasticity is within the range above, the cleaning putty is soft, has good conformability, and is likely to enter a minute gap. If the degree of plasticity is less than 20, the cleaning putty will be too soft and be likely to be torn into pieces and to remain between leads. If the degree of plasticity is 80 or more, the cleaning putty will be hard and be less likely to enter between leads, which is not preferable.

The cleaning putty of the present invention has adhesive strength (tack strength) with aluminum of 0.3 N or more and 4 N or less, preferably 0.4 or more and 3.8 N or less, and more preferably 0.5 or more and 3.6 N or less. When the adhesive strength (tack strength) is within the range above, the cleaning putty selectively adheres to a silicone material without adhering to a substrate and a lead, thus making it possible to prevent breakage of the component. In addition, the lead and the like are less likely to be damaged.

It is preferable that when the cleaning putty is pressed against an aluminum block and is then peeled off therefrom, a trace of interfacial fracture does not remain on the aluminum block side. Also, it is preferable that the cleaning putty is pressed against a printed circuit board or silicone rubber and is then peeled off therefrom, and a trace of interfacial fracture does not remain on the printed circuit board side but remains on the silicone rubber side. This enables efficient cleaning.

It is preferable that the cleaning putty further contains organopolysiloxane containing a boric acid compound. This makes it possible to produce putty that more selectively adheres to a silicone material without adhering to a substrate and a lead to prevent breakage of the component and can enter a minute gap.

It is preferable that when a heat-dissipating material composed of a liquid thermally conductive silicone composition is applied to a printed circuit board to give a length of 10 mm, a width of 20 mm, and a thickness of 0.3 mm, followed by the measurement of the mass, and the cleaning putty is pressed against the printed circuit board and is then peeled off therefrom, the removal ratio in the first round is 60 mass%, and the removal ratio in the second round is 85 mass% or more. This makes it possible to produce putty that more selectively adheres to a silicone material without adhering to a substrate and a lead to prevent breakage of the component and can enter a minute gap.

It is preferable that the cleaning putty of the present invention is molded into a tape shape, a sheet shape, a rod shape, or a block shape. This makes it possible to clean various types of semiconductor package components.

The method for cleaning a semiconductor package component according to the present invention includes cleaning a semiconductor package component by pressing the cleaning putty above against a printed circuit board to which a silicone-based heat-dissipating material has been applied or attached, and then peeling off the cleaning putty therefrom. Thereby, the method has the following advantages.
(1) An improvement in workability, such as low adhesion to a hand, prevention of breakage of components on the substrate, or adaptability to a large area, leads to ease of handling, and it is possible to rapidly and easily remove materials that have entered narrow areas.
(2) Conformability to silicone is good, thus making it possible to adsorb liquid TIM by merely pressing the putty on it.
(3) The putty is in the form of soft putty, thus making it easy to clean even a gap of less than 1 mm, such as a gap between the leads.
(4) Pressing the putty against a large area is possible, thus making it possible to clean an electronic component with a large area and many protrusions and recesses at once.
(5) The putty does not adhere to the material of the substrate but can adhere to and clean only the silicone material.

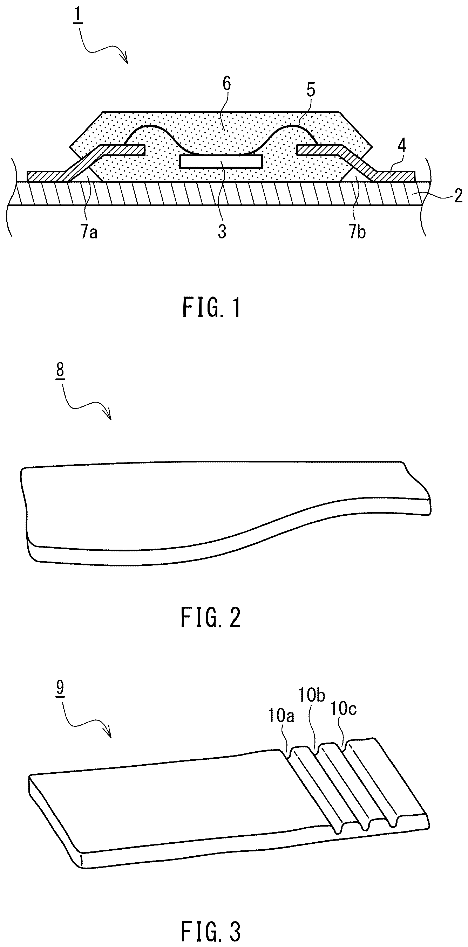

The following describes the present invention with reference to the drawings. FIG. 1 is a schematic cross-sectional view of a semiconductor package component 1 according to an embodiment of the present invention. In this semiconductor package component 1, an IC chip 3 is mounted on a printed circuit board 2, the printed circuit board 2 and the IC chip 3 are electrically connected to each other via leads 4 and gold wires 5, and the IC chip 3 is sealed with a sealing resin 6. Gaps 7a and 7b are formed between the printed circuit board 2, the leads 4, and the sealing resin 6.

FIG. 2 is a schematic perspective view of cleaning putty 8 according to an embodiment of the present invention. This cleaning putty 8 has a tape shape as a whole, and its end portion has a thickness of 2 mm. FIG. 3 is a schematic perspective view of cleaning putty 9 according to another embodiment of the present invention. This cleaning putty 9 is provided with three grooves 10a, 10b, and 10c at an end portion thereof so as to increase the area of contact with dust particles. The cleaning putty of the present invention is soft and can thus be molded into a desired shape other than the shape above, such as a common tape shape, sheet shape, rod shape, or block shape.

### Examples

Hereinafter, the present invention will be described by way of examples. The present invention is not limited to the examples.

The various parameters were measured using the methods below.

### <Hardness (Degree of Plasticity)>

In accordance with JIS K 6300-3 / ISO 2007:1991, a sample was compressed between two metal plates to a certain thickness (1 mm) with a certain load (300 N) for a certain period of time (15 seconds) at a measurement temperature of 23°C using a Wallace Rapid plastometer, and was then further compressed with a certain load (100 N) for a certain period of time (15 seconds). A value obtained by multiplying a sample thickness (t) at this time by 100 was defined as hardness (degree of plasticity). The smaller this value is, the softer the sample is.

### <Adhesive Strength (Tack Strength) with Aluminum Plate>

The adhesive strength was measured using a tackiness checker HTC-1 (manufactured by Toyo Seiki Co., Ltd.). A contactor was pressed against a subject at a pressure described below for a period of time described below and was then peeled off therefrom, and the stress at this time was detected using a load-cell method. In the examples below, the pressure applied by the tackiness checker (manufactured by Toyo Seiki Co., Ltd.) was 10 N, the period of time was 6 seconds, and an aluminum F ring was used as the contactor.

### <Interfacial Fracture from Printed Circuit Board and Silicone Rubber>

A common printed circuit board that had been subjected to solder resist processing was used as the printed circuit board material. A silicone rubber sheet having a thickness of 1 mm was used as the silicone rubber.
Measurement Method
   (1) The sample is pressed against each material.
   (2) The sample is peeled off, and determination is made based on the evaluation criteria below.
No: The sample does not remain on the material.
Yes (small): A portion of the sample remains.
Yes (large): Most of the sample adheres and remains.

### <SPG-30B Cleaning Test> (SPG-30B is the name of thermally conductive silicone product manufactured by Fuji Polymer Industries Co., Ltd.)

Measurement Method
(1) SPG-30B is applied to a common substrate that was subjected to solder resist processing to give a length of 10 mm, a width of 20 mm, and a thickness of 0.3 mm, and the weight is measured.
(2) The sample is pressed against the substrate so as to cover the SPG from above.
(3) The sample is peeled off therefrom as it is, and the weight of the remaining SPG is measured. (first round)
(4) The different surface of the sample is pressed against the substrate again and is then peeled off therefrom, and the weight of the remaining SPG is measured. (second round)
(5) The change ratio based on the initial weight is calculated, and the obtained value is taken as the removal ratio.

### (Example 1)

- 100 g of an uncrosslinked millable silicone rubber composition containing diorganopolysiloxane and a boric acid compound: trade name "KE-1614H-U", manufactured by Shin-Etsu Chemical Co., Ltd.
- 8 g of polyorganosiloxane-based polymer: trade name "CF3110", manufactured by Toray Dow Corning Silicone

The materials above were mixed uniformly and the resulting mixture was used as cleaning putty.

### (Example 2)

- 100 g of an uncrosslinked millable silicone rubber composition containing diorganopolysiloxane and a boric acid compound: trade name "KE-1614H-U", manufactured by Shin-Etsu Chemical Co., Ltd.
- 20 g of polyorganosiloxane-based polymer: trade name "CF3110", manufactured by Toray Dow Corning Silicone

The materials above were mixed uniformly and the resulting mixture was used as cleaning putty.

### (Example 3)

- 100 g of an uncrosslinked millable silicone rubber composition containing diorganopolysiloxane and a boric acid compound: trade name "KE-1614H-U", manufactured by Shin-Etsu Chemical Co., Ltd.
- 37 g of polyorganosiloxane-based polymer: trade name "CF3110", manufactured by Toray Dow Corning Silicone

The materials above were mixed uniformly and the resulting mixture was used as cleaning putty.

### (Example 4)

- 100 g of a millable silicone rubber composition containing organopolysiloxane, silica, cristobalite, quartz, and diatomaceous earth: trade name "DOWSIL CF 9306", manufactured by Toray Dow Corning Silicone
- 5 g of an organopolysiloxane additive containing a boric acid compound: trade name "X-93-1169", manufactured by Shin-Etsu Chemical Co., Ltd.
- 20 g of polyorganosiloxane-based polymer: trade name "CF3110", manufactured by Toray Dow Corning Silicone

The materials above were mixed uniformly and the resulting mixture was used as cleaning putty.

### (Example 5)

100 g of a millable silicone rubber composition, trade name "XIAMETER SE 1185 U", manufactured by Toray Dow Corning Silicone, was used as cleaning putty.

### (Example 6)

- 100 g of a millable silicone rubber composition: trade name "XIAMETER SE 1185 U", manufactured by Toray Dow Corning Silicone
- 5 g of an organopolysiloxane additive containing a boric acid compound: trade name "X-93-1169", manufactured by Shin-Etsu Chemical Co., Ltd.

The materials above were mixed uniformly and the resulting mixture was used as cleaning putty.

### (Comparative Example 1)

100 g of an uncrosslinked millable silicone rubber composition containing diorganopolysiloxane and a boric acid compound, trade name "KE-1614H-U", manufactured by Shin-Etsu Chemical Co., Ltd., was used as cleaning putty.

### (Comparative Example 2)

- 100 g of an uncrosslinked millable silicone rubber composition containing diorganopolysiloxane and a boric acid compound: trade name "KE-1614H-U", manufactured by Shin-Etsu Chemical Co., Ltd.
- 74 g of polyorganosiloxane-based polymer: trade name "CF3110", manufactured by Toray Dow Corning Silicone

The materials above were mixed uniformly and the resulting mixture was used as cleaning putty.

### (Comparative Example 3)

- 100 g of a millable silicone rubber composition containing organopolysiloxane, silica, cristobalite, quartz, and diatomaceous earth: trade name "DOWSIL CF 9306", manufactured by Toray Dow Corning Silicone
- 20 g of polyorganosiloxane-based polymer: trade name "CF3110", manufactured by Toray Dow Corning Silicone

The materials above were mixed uniformly and the resulting mixture was used as cleaning putty.

### (Comparative Example 4)

A silicone-based adhesive containing, as a main component, a peroxide curable type adhesive, trade name "DOWSIL SH 4280", manufactured by Toray Dow Corning Silicone, was used as cleaning putty.

### (Comparative Example 5)

A gel sheet made of an acrylic resin, trade name "SARCON NR-c", manufactured by Fuji Polymer Industries Co., Ltd., was remolded into the form of putty and was used as cleaning putty.

The conditions described above and the results are collectively shown in Tables 1 and 2.

**[Table 1]**

| | | Ex. 1 | Ex. 2 | Ex. 3 | Comp. Ex. 1 | Comp. Ex. 2 | Comp. Ex. 3 |
|---|---|---|---|---|---|---|---|
| Millable silicone rubber (KE-1614H-U) | | 100 | 100 | 100 | 100 | 100 | - |
| Additive (X-93-1169) | | - | - | - | - | - | - |
| Millable silicone rubber (CF 9306) | | - | - | - | - | - | 100 |
| Additive (CF3110) | | 8 | 20 | 37 | - | 74 | 20 |
| Millable silicone rubber (XIAMETER SE 1185 U) | | - | - | - | - | - | - |
| Adhesive strength (tack strength) with aluminum plate [N] | | 2.2 | 2.4 | 2.5 | 1.8 | 3.0 | 3.0 |
| Hardness (degree of plasticity) | | 59.5 | 35.2 | 23.3 | 94.2 | 12.3 | 19.3 |
| Interfacial fracture from substrate | | No | No | No | No | No | No |
| Interfacial fracture from silicone rubber | | Yes (small) | Yes (large) | Yes (large) | No | Yes (large) | Yes (large) |
| SPG-30B cleaning test | First round removal ratio (%) | 85% | 83% | 59% | 67% | 74% | 67% |
| | Second round removal ratio (%) | 90% | 99% | 91% | 90% | 87% | 90% |

**[Table 2]**

| | | Ex. 4 | Ex. 5 | Ex. 6 | Comp. Ex. 4 | Comp. Ex. 5 |
|---|---|---|---|---|---|---|
| Millable silicone rubber (KE-1614H-U) | | - | - | - | Commercially available product | Application of commercially available product |
| Additive (X-93-1169) | | 5 | - | 5 | | |
| Millable silicone rubber (DDWSIL CF 9306) | | 100 | - | - | | |
| Additive (CF3110) | | 20 | - | - | | |
| Millable silicone rubber (XIAMETER SE 1185 U) | | - | 100 | 100 | | |
| Adhesive strength (tack strength) with aluminum plate [N] | | 1.7 | 2.9 | 0.9 | 15.1 | 6.9 |
| Hardness (degree of plasticity) | | 25.0 | 42.1 | 27.4 | 33 | 27.4 |
| Interfacial fracture from printed circuit board | | No | No | No | Yes (large) | Yes (small) |
| Interfacial fracture from silicone rubber | | Yes (large) | Yes (large) | Yes (large) | Yes (large) | Yes (small) |
| SPG-30B cleaning test | First round removal ratio (%) | 91% | 68% | 90% | 59% | 4% |
| | Second round removal ratio (%) | 99% | 95% | 99% | 85% | 7% |

The following were revealed from Tables 1 and 2.
(1) The ranges of hardness (degree of plasticity) of Examples 1 to 3 and Comparative Examples 1 and 2 were compared. All of Examples 1 to 3 were preferable, whereas Comparative Example 1 was too hard to enter between the leads, and Comparative Example 2 was too soft and was thus likely to be torn into pieces and remain between the leads.
(2) The performance in the SPG30B cleaning test was improved in Examples 4 and 6 due to the addition of a boric acid compound compared with Comparative Example 3 and Example 5, respectively.
(3) Comparative Example 4, a silicone-based adhesive containing a peroxide curable type adhesive as a main component, was not preferable because the extents of interfacial fracture from the substrate and the silicone rubber were both high.
(4) Comparative Example 5, which was obtained by remolding a gel sheet made of an acrylic resin into the form of putty, had too high adhesive strength with aluminum, was likely to be torn into pieces, and had low performance in the SPG30B cleaning test.

Also, it was confirmed that the cleaning putty of Examples 1 to 6 of the present invention has the following effects.
(1) When the cleaning putty of Examples 1 to 6 is used to clean a flat portion, it is sufficient that the cleaning putty is merely pressed and peeled off, and thus the handleability and the operation efficiency are favorable.
(2) The lead portion has a gap of about 0.3 to 0.5 mm, and dust particles present inside the lead portion and the like are hard to remove using a conventional method (e.g., using commercially available tissue paper, trade name "Kimwipes", manufactured by Kimberly Clark Corp.) and the cleaning putty of Comparative Examples 1 to 5 and need to be removed using a needle. However, even for a narrow area, it is sufficient that the cleaning putty of Examples 1 to 6 is merely pressed and peeled off, and thus the handleability and the operation efficiency are favorable.
(3) The material needs to be repaired after coating failure or rotation in an environment at about 70°C. However, in these cases as well, it is sufficient that the cleaning putty is merely pressed and peeled off, and the handleability and the operation efficiency are favorable.

### Industrial Applicability

The cleaning putty of the present invention is suitable for cleaning a semiconductor package component.

### Description of Reference Numerals

- 1: Semiconductor package component
- 2: Printed circuit board 2
- 3: IC chip
- 4: Lead wire
- 5: Gold wire
- 6: Sealing resin
- 7a, 7b: Gap
- 8, 9: Cleaning putty
- 10a, 10b, 10c: Groove

## Claims

1. Cleaning putty for cleaning a semiconductor package component, comprising a millable silicone rubber composition as a main component, and
having a degree of plasticity of 20 or more and less than 80 when determined in accordance with JIS K 6300-3:2019 / ISO 2007:1991, and
adhesive strength with aluminum of 0.3 N or more and 4 N or less.

2. The cleaning putty according to claim 1, wherein when the cleaning putty is pressed against an aluminum block and is then peeled off therefrom, a trace of interfacial fracture does not remain on an aluminum block side.

3. The cleaning putty according to claim 1 or 2, wherein the cleaning putty is pressed against a printed circuit board or silicone rubber and is then removed therefrom, and a trace of interfacial fracture does not remain on a printed circuit board side but remains on a silicone rubber side.

4. The cleaning putty according to any one of claims 1 to 3, wherein a content of the millable silicone rubber is 40 mass% or more and 100 mass% or less with respect to 100 mass% of the cleaning putty.

5. The cleaning putty according to any one of claims 1 to 4, wherein the cleaning putty further contains organopolysiloxane containing a boric acid compound.

6. The cleaning putty according to any one of claims 1 to 5, wherein the cleaning putty further contains organopolysiloxane other than the millable silicone rubber.

7. The cleaning putty according to any one of claims 1 to 6, wherein the millable silicone rubber composition includes uncrosslinked millable silicone rubber.

8. The cleaning putty according to any one of claims 1 to 7, wherein when a heat-dissipating material composed of a liquid thermally conductive silicone composition is applied to a printed circuit board to give a length of 10 mm, a width of 20 mm, and a thickness of 0.3 mm, followed by the measurement of the mass, and the cleaning putty is pressed against the printed circuit board and is then peeled off therefrom, a removal ratio in a first round is 60 mass%, and a removal ratio in a second round is 85 mass% or more.

9. The cleaning putty according to any one of claims 1 to 8, wherein the cleaning putty is molded into a tape shape, a sheet shape, a rod shape, or a block shape.

10. A method for cleaning a semiconductor package component using the cleaning putty according to any one of claims 1 to 9,
the method comprising cleaning a semiconductor package component by pressing the cleaning putty against a printed circuit board to which a silicone-based heat-dissipating material has been applied or attached, and then peeling off the cleaning putty therefrom.
